# EUROPÄISCHE PATENTSCHRIFT

(11) **EP 0 909 682 B1**
(45) Veröffentlichungstag und Bekanntmachung des Hinweises auf die Patenterteilung: **17.03.2004**
(21) Anmeldenummer: 98118075.5
(22) Anmeldetag: 24.09.1998
(51) Int. Cl.: B60R 19/36

(54) **Pralldämpfer für ein Kraftfahrzeug**
Shock absorber for motor vehicle
Amortisseur de chocs pour véhicule automobile

(30) Priorität: 16.10.1997 DE 19745651
(43) Veröffentlichungstag der Anmeldung: 21.04.1999
(73) Patentinhaber: DaimlerChrysler AG, 70567 Stuttgart (DE)
(72) Erfinder: Hartlieb, Markus, 72141 Walddorfhäslach (DE); Nohr, Matthias, Dr., 70188 Stuttgart (DE)

(56) Entgegenhaltungen:
- DE-U- 29 700 017
- US-A- 5 460 421

## Beschreibung

Die Erfindung betrifft einen Pralldämpfer für ein Kraftfahrzeug gemäß dem Oberbegriff des Anspruches 1.

Aus der US 37 89 948 A1, die im Oberbegriff des Anspruches 1 berücksichtigt ist, ist ein Pralldämpfer im Vorbau eines Kraftfahrzeuges bekannt, der hinter einer Prallplatte am vorderen Stoßfänger ein elastisch verformbares Bauteil mit einer Feder aufweist, durch dessen Verformung beim Fahrzeugaufprall Energie absorbiert werden soll. In Abhängigkeit von der Fahrzeuggeschwindigkeit wird der Pralldämpfer durch eine herbeigeführte Änderung der Federkraft weicher oder härter für den Aufprall eingestellt. Diese Beeinflussung der Feder wird in aufwendiger und kostenintensiver Art und Weise mit einer einstellbaren Druckpumpe umgesetzt, die auf einen Hydraulikkolben wirkt.

In der DE 196 33 110 A1 ist ein Pralldämpfer für ein Kraftfahrzeug beschrieben, welcher Deformationselemente mit unterschiedlicher Steifigkeit aufweist, die in verschiedenen Aufprallgeschwindigkeitsbereichen aufprallenergieverzehrend plastisch deformierbar sind. Das weniger steife Deformationselement ist in der eine Aufprallenergie aufnehmenden Fahrzeugzone fest angeordnet, während das steifere Deformationselement fahrgeschwindigkeitsabhängig dem weniger steifen Deformationselement zugeordnet wird. Der Pralldämpfer kann bei seiner Beaufschlagung während eines Aufpralles nur aufgrund einer plastischen Verformung energieabsorbierend wirken, so daß eine Reparatur des Pralldämpfers immer notwendig wird. Die Änderung des Dämpfungsverhaltens ist nur mit einer translatorischen Bewegung oder mit einer Schwenkbewegung des steiferen Deformationselementes mittels eines Antriebes erreichbar, der dann auch die Belastung abstützen können muss, wodurch dieser Pralldämpfer ebenfalls teuer ist.

Aus der DE 41 21 497 C2 geht ein Stoßfängersystem für Kraftfahrzeuge hervor, welches einen Pralldämpfer umfasst, der einen Pralldämpferkolben in einem Pralldämpferzylinder aufweist. Durch Ermittlung der Relativgeschwindigkeit zwischen dem Pralldämpferkolben und dem Pralldämpferzylinder kann ein Sperrmechanismus aktiviert werden, der die weitere Verschiebung des Pralldämpferkolbens blockieren kann, wonach eine plastische Verformung des Pralldämpfers zur Aufprallenergieabsorption beginnt. Stöße auf den Stoßfänger des Kraftfahrzeuges werden absorbiert, indem der Stoßfänger nachgibt und der Pralldämpferkolben in den Pralldämpferzylinder hineinverschoben wird, wodurch auch der Stoßfänger nicht mehr in seine Ausgangslage zurückgeführt und ein Werkstattbesuch notwendig wird. Für das Kolben-/ Zylindersystem ist zudem eine große Bauraumlänge notwendig.

Die DE 297 00 017 U1 offenbart einen Aufpralldämpfer mit einem elastisch verformbaren Bauteil sowie einem plastisch verformbaren Bauteil, wobei dem elastisch verformbaren Bauteil eine in Abhängigkeit aktivierbare von der Aufprallgeschwindigkeit Verriegelungseinheit zugeordnet ist.

Aus der gattungsbildenden US 5 460 421 B1 ist ein Pralldämpfer für ein Kraftfahrzeug, mit einer Prallplatte, auf die eine Aufprallkraft einwirkt, und einem elastisch verformbaren Bauteil in Aufprallrichtung anschließend an die Prallplatte, durch dessen elastische Verformung beim Aufprall Energie absorbiert wird, wobei dem elastisch verformbaren Bauteil mindestens ein durch die Prallplatte beaufschlagbares und beim Fahrzeugaufprall energieabsorbierend plastisch verformbares Bauteil zuschaltbar ist und eine durch die Prallplatte herbeigeführte Verschiebung des plastisch verformbaren Bauteiles durch ein Sperrteil als verformender Widerstand blockierbar ist, bekannt.

Die Aufgabe der Erfindung besteht darin, einen gattungsgemäßen Pralldämpfer zu schaffen, der eine andere Möglichkeit zum Zuschalten des plastisch verformbaren Bauteils liefert.

Die Aufgabe wird durch die Merkmale des Patentanspruches 1 gelöst.

Ein Pralldämpfer für ein Kraftfahrzeug, welcher in Aufprallrichtung anschließend an eine Prallplatte ein elastisch verformbares Bauteil aufweist, kann bei einem leichteren Aufprall des Fahrzeuges Aufprallenergie durch die Verformung dieses Bauteiles absorbieren, wonach das elastische Bauteil seine ursprüngliche Kontur wieder einnimmt. Z.B. ein verschobener Stoßfänger, der durch eine Aufprallkraft belastet auf den Pralldämpfer einwirkt, wird also anschließend wieder in seine ursprüngliche Lage zurückgeführt, weshalb keine Reparatur am Fahrzeug durchgeführt werden muß.

Um die Energieabsorption im Pralldämpfer für einen starken Fahrzeugaufprall zu erhöhen, ist diesem elastisch verformbaren Bauteil ein durch die Prallplatte beaufschlagbares und beim Fahrzeugaufprall plastisch verformbares Bauteil zuschaltbar, welches dann zusätzlich und mit einem größeren Betrag Aufprallenergie absorbieren kann.

Das elastisch und das plastisch energieabsorbierend verformbare Bauteil können in der Bauhöhe parallelwirkend angeordnet sein, so daß der Pralldämpfer trotz großer Absorptionsfähigkeit eine nur relativ geringe Bauhöhe aufweisen muß. Am wenigsten Bauraum ist dann notwendig, wenn das eine verformbare Bauteil rohrförmig und mit annähernd paralleler oder auch koaxialer Längsachse das andere verformbare Bauteil umfaßt.

Als elastisches Bauteil läßt sich kostengünstig eine Spiralfeder oder ein Kunststoffdämpfer verwenden, während das plastisch verformbare Bauteil einfach durch ein Rohr gebildet werden kann.

Das plastisch verformbare Bauteil kann dem elastisch verformbaren Bauteil in einfacher Weise dadurch zugeschaltet werden, indem in den Verschiebeweg des bei der Beaufschlagung durch die Prallplatte verschiebbaren, plastisch verformbaren Bauteiles ein Sperrteil bewegbar ist, durch das die Verformung des plastisch verformbaren Bauteiles eingeleitet wird.

Dieses verschiebbare Sperrteil ist in einer fahrzeugfesten Abstützung für das elastisch verformbare Bauteil integriert untergebracht, so daß der Pralldämpfer auch hierdurch nur wenig Platz benötigt.

Die beiden Schaltstellungen des Pralldämpfers - elastische Reaktion z.B. bei einem Parkrempler oder elastische und plastische Reaktion bei einem stärkeren Fahrzeugaufprallkönnen aufgrund eines vor oder beim Aufprall erfaßten Meßwertes gesteuert werden.

Weiterhin ist natürlich auch die Zuschaltung von mehreren zusammenwirkenden, plastisch verformbaren Bauteilen möglich, um so eine besonders große Energieabsorption des Pralldämpfers beim Fahrzeugaufprall zu erreichen.

Weitere Vorteile und Ausgestaltungen gehen aus den Unteransprüchen und der Beschreibung hervor.

Die Erfindung ist nachstehend anhand einer Zeichnung näher beschrieben.

Es zeigen:
- Fig. 1a: in einer Seitenansicht einen Pralldämpfer mit einer elastisch verformbaren Feder und einem plastisch verformbaren Bauteil an einer Prallplatte,
- Fig. 1b: den kraftbeaufschlagten Pralldämpfer aus Fig. 1a mit dem zugeschalteten plastisch verformbaren Bauteil,
- Fig. 2a: in einer Seitenansicht ein weiteres Ausbildungsbeispiel eines Pralldämpfers mit einem elastisch verformbaren Kunststoffdämpfer, und
- Fig. 2b: den Pralldämpfer aus Fig. 2a mit dem zugeschalteten plastisch verformbaren Bauteil.

Die Figuren zeigen einen Pralldämpfer 1 für ein nicht näher dargestelltes Kraftfahrzeug, der z.B. im Fahrzeug hinter einer Stoßstange angeordnet ist, und auf dessen Prallplatte 2 die Kräfte übertragen werden, die auf die Stoßstange bei einem Aufprall einwirken. Der Pralldämpfer 1 kann in den dargestellten Ausbildungsbeispielen zwei Schaltstellungen einnehmen, in denen er weicher oder härter reagiert und dabei weniger oder mehr Aufprallenergie absorbieren kann.

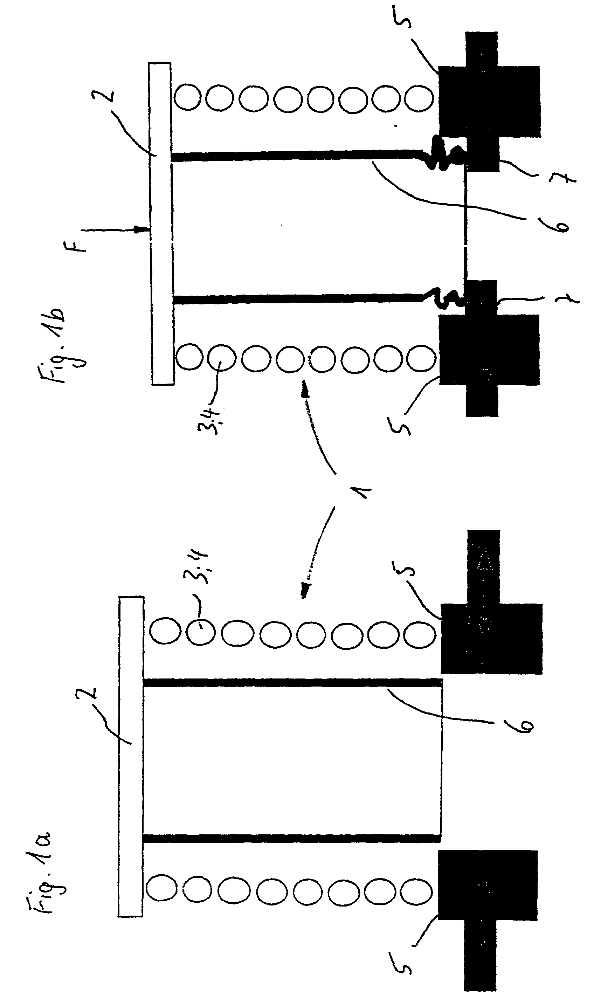

In den Figuren 1a und 1b umfaßt der Pralldämpfer 1 ein elastisch verformbares Bauteil 3, das hier durch eine kostengünstige Spiralfeder 4 gebildet ist, welche bei einem leichten Aufprall des Fahrzeuges, wie z.B. bei einem Parkrempler, in Axialrichtung gegen eine fahrzeugfeste Abstutzung 5 zusammengedrückt wird und dabei Aufprallenergie absorbiert, also aufnimmt, und anschließend wieder in ihre entspannte Lage zurückgeht, wobei auch die Prallplatte 2 und z.B. die Stoßstange wieder in die ursprüngliche Lage überführt werden. Eine Reparatur des Kraftfahrzeuges wird bei derartig geringen Belastungen damit nicht notwendig.

Durch die Prallplatte 2 ebenfalls beaufschlagbar ist ein mit dieser zudem verbundenes rohrförmiges Bauteil 6, welches beim hier nicht gezeigten Einfedern der Spiralfeder 4 zwischen der fahrzeugfesten Abstützung 5 hindurchverschoben wird.

Bei einem stärkeren Aufprall des Kraftfahrzeuges, bei dem eine höhere Energieabsorption zum Schutze der Insassen notwendig wird, und der durch einen Aufprallmeßwert oder durch ein Steuersignal einer Precrasherkennung erfaßt werden kann, wird der elastisch verformbaren Spiralfeder 4 das rohrförmige Bauteil 6 energieabsorbierend wirkend hinzugeschaltet. Das rohrförmige Bauteil 6 wird hierzu, wie in der Fig. 1b dargestellt, in seiner durch die Prallplatte 2 aufgrund einer Aufprallkraft Pfeil F) herbeigeführten Verschiebung durch ein Sperrteil 7 blockiert und damit plastisch verformt. Diese plastische Verformung führt zu einem starken Anstieg der Energieabsorption beim Fahrzeugaufprall.

Da die Spiralfeder 4 das rohrförmige Bauteil 6 mit annähernd paralleler Längsachse umschließt und auch das Sperrteil 7 in die fahrzeugfeste Abstützung 5 integriert ist, erfordert dieser Pralldämpfer 1 trotz seiner hohen energieabsorbierenden Wirkung einen relativ geringen Bauraum.

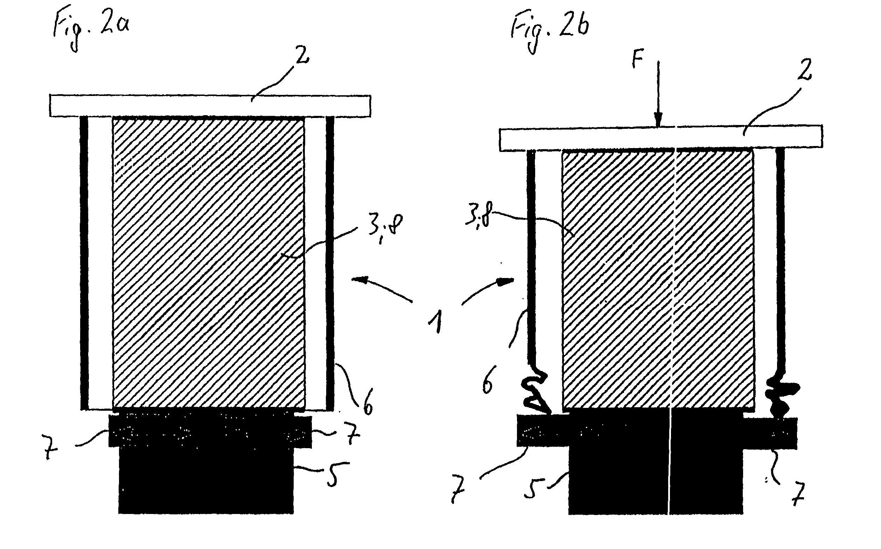

Die Figuren 2a und 2b zeigen einen entsprechend funktionierenden Pralldämpfer 1, in dem das elastisch verformbare Bauteil 3 durch einen Kunststoffdämpfer 8 gebildet wird, und das plastisch verformbare Bauteil 6 rohrförmig ausgebildet ist.

Der Pralldämpfer 1 ist bei einem leichten Aufprall entsprechend der Fig. 2a geschaltet, wo der Kunststoffdämpfer 8, hier nicht dargestellt, durch eine Kraft auf die Prallplatte 2 energieabsorbierend in Axialrichtung komprimierbar ist, während das rohrförmige Bauteil 6 an der fahrzeugfesten Abstützung 5 für den Kunststoffdämpfer 8 vorbeigeschoben wird. Hiernach weist der Kunststoffdämpfer elastisch wirkend seine ursprüngliche axiale Länge auf, und ein mit der Prallplatte 2 bewegter Stoßfänger wird ebenfalls in seine Ausgangslage zurückgeführt.

Bei einem starken Fahrzeugaufprall wird das Sperrteil 7 aus der Abstützung 5 durch einen nicht dargestellten Antrieb hervorgeschoben und der Verschiebeweg des rohrförmigen Bauteiles 6 blockiert, so daß dieses bei großer Energieabsorption durch die Aufprallkraft (Pfeil F) gegen den Widerstand des Sperrteiles 7 plastisch verformt wird.

Auch hier kann das Sperrteil durch einen Aufprallmeßwert oder ein Steuersignal einer Precrasherkennung gesteuert werden.

Das rohrförmige Bauteil 6 umfaßt bauraumsparend den Kunststoffdämpfer 8, und das bewegbare Sperrteil 7 ist ebenfalls in die fahrzeugfeste Abstützung 5 integriert.

## Patentansprüche

1. Pralldämpfer (1) für ein Kraftfahrzeug, mit einer Prallplatte (2), auf die eine Aufprallkraft einwirkt, und einem elastisch verformbaren Bauteil (3) in Aufprallrichtung anschließend an die Prallplatte (2), durch dessen elastische Verformung beim Aufprall Energie absorbiert wird, wobei dem elastisch verformbaren Bauteil (3) mindestens ein durch die Prallplatte (2) beaufschlagbares und beim Fahrzeugaufprall energieabsorbierend plastisch verformbares Bauteil (6) zuschaltbar ist und eine durch die Prallplatte (2) herbeigeführte Verschiebung des plastisch verformbaren Bauteiles (6) durch ein Sperrteil (7) als verformender Widerstand blockierbar ist,
**dadurch gekennzeichnet,**
**daß** eine fahrzeugfeste Abstützung (5) für das elastisch verformbare Bauteil (3) auch das bewegbare Sperrteil (7) integriert umfasst.

2. Pralldämpfer nach Anspruch 1,
**dadurch gekennzeichnet,**
**daß** die Bauteile (3, 6) in der Bauhöhe parallelwirkend angeordnet sind.

3. Pralldämpfer nach Anspruch 1,
**dadurch gekennzeichnet,**
**daß** das eine verformbare Bauteil (3, 6) rohrförmig und mit annähernd paralleler Längsachse das andere verformbare Bauteil (6, 3) umschließt.

4. Pralldämpfer nach Anspruch 1,
**dadurch gekennzeichnet,**
**daß** das Sperrteil (7) aufgrund eines Aufprallmeßwertes gesteuert wird.

5. Pralldämpfer nach Anspruch 1,
**dadurch gekennzeichnet,**
**daß** das Sperrteil (7) durch das Steuersignal einer Precrasherkennung bewegbar ist.

6. Pralldämpfer nach Anspruch 1,
**dadurch gekennzeichnet,**
**daß** das elastisch verformbare Bauteil (3) als Spiralfeder (4) ausgebildet ist.

7. Pralldämpfer nach Anspruch 1,
**dadurch gekennzeichnet,**
**daß** das elastisch verformbare Bauteil (3) als Kunststoffdämpfer (8) ausgebildet ist.

## Claims

1. Impact absorber (1) for a motor vehicle, with an impact plate (2) subjected to an impact force, and with a component (3) capable of elastic deformation joined to the impact plate (2) in the direction of impact and absorbing energy on impact by elastic deformation, whereby at least one component (6) capable of plastic deformation, which can be pressurised by the impact plate (2) and absorbs energy during an impact of the vehicle, can be added to the component (3) capable of elastic deformation and a displacement of the component (6) capable of plastic deformation caused by the impact plate (2) can be blocked by a locking element (7) acting as a deforming resistance,
**characterised in that**
a support (5) mounted on the vehicle for the component (3) capable of elastic deformation is integrated with the movable locking element (7).

2. Impact absorber according to claim 1,
**characterised in that**
the components (3, 6) are arranged for parallel action within the overall height of the unit.

3. Impact absorber according to claim 1,
**characterised in that** one deformable component (3, 6) encloses the other deformable component (6, 3) in a tubular arrangement with approximately parallel longitudinal axes.

4. Impact absorber according to claim 1,
**characterised in that**
the locking element (7) is controlled on the basis of a measured impact value.

5. Impact absorber according to claim 1,
**characterised in that**
the locking element (7) is movable by the control signal of a pre-crash recognition system.

6. Impact absorber according to claim 1,
**characterised in that**
the component (3) capable of elastic deformation is designed as a coiled spring (4).

7. Impact absorber according to claim 1,
**characterised in that**
the component (3) capable of elastic deformation is designed as a plastic damper (8).

## Revendications

1. Amortisseur de chocs (1) pour un véhicule automobile avec une platine d'impact (2) sur laquelle agit une force d'impact et un composant pouvant subir une déformation élastique (3), qui est placé en direction d'impact à la suite de la platine d'impact (2) et dont la déformation élastique absorbe de l'énergie lors de l'impact, dans lequel il peut être adjoint au composant pouvant subir une déformation élastique (3) au moins un composant pouvant subir une déformation plastique (6), qui peut être soumis à une action par la platine d'impact (2) et qui absorbe de l'énergie lors d'un impact du véhicule et dans lequel un déplacement du composant pouvant subir une déformation plastique (6) provoqué par la platine d'impact (2) peut être bloqué par un élément de blocage (7) servant de résistance qui se déforme, **caractérisé en ce qu'**un support (5) solidaire du véhicule pour le composant pouvant subir une déformation élastique (3) comprend aussi l'élément de blocage mobile (7) qui y est intégré.

2. Amortisseur de chocs selon la revendication 1, **caractérisé en ce que** les composants (3, 6) sont disposés de manière à avoir une action parallèle sur leur hauteur.

3. Amortisseur de chocs selon la revendication 1, **caractérisé en ce que** l'un des composants déformables (3, 6) entoure l'autre composant déformable (6, 3) de manière circulaire et avec un axe longitudinal approximativement parallèle.

4. Amortisseur de chocs selon la revendication 1, **caractérisé en ce que** l'élément de blocage (7) est commandé sur la base d'une valeur de mesure d'un impact.

5. Amortisseur de chocs selon la revendication 1, **caractérisé en ce que** l'élément de blocage (7) est déplaçable par le signal de commande d'un système de détection préliminaire d'impact.

6. Amortisseur de chocs selon la revendication 1, **caractérisé en ce que** le composant pouvant subir une déformation élastique (3) est configuré comme ressort hélicoïdal (4).

7. Amortisseur de chocs selon la revendication 1, **caractérisé en ce que** le composant pouvant subir une déformation élastique (3) est configuré comme amortisseur en matériau synthétique (8).
